# FASCICULE DE BREVET EUROPEEN

(11) **EP 4 315 569 B1**
(45) Date de publication et mention de la délivrance du brevet: **06.05.2026**
(21) Numéro de dépôt: 22717385.3
(22) Date de dépôt: 22.03.2022
(51) Int. Cl.: H02K 3/38, H02K 15/10, H02K 15/24

(54) **PROCÉDÉ D'INSTALLATION DE GROUPES DE BOBINE DANS UNE MACHINE ÉLECTRIQUE**
VERFAHREN ZUM INSTALLIEREN VON SPULENGRUPPEN IN EINER ELEKTRISCHEN MASCHINE
METHOD FOR INSTALLING COIL GROUPS IN AN ELECTRIC MACHINE

(30) Priorité: 23.03.2021 FR 2102912
(43) Date de publication de la demande: 07.02.2024
(73) Titulaire: Liebherr-Aerospace Toulouse SAS, 31200 Toulouse (FR)
(72) Inventeur: COUDERC, Mathieu, 31016 TOULOUSE Cedex 2 (FR); RAMADOUR, François, 31016 TOULOUSE Cedex 2 (FR)
(74) Mandataire: Bringer IP
(86) Numéro de dépôt international: PCT/EP2022/057541
(87) Numéro de publication internationale: WO 2022/200381

(56) Documents cités:
- EP-A1- 0 095 962
- JP-A- H01 234 037
- JP-A- S5 883 555
- JP-A- S54 139 003
- JP-A- S58 148 643
- JP-U- S5 715 673
- JP-Y2- S6 037 028
- US-A- 4 602 424

## Description

### Domaine technique de l'invention

L'invention concerne un procédé d'installation de groupes de bobine dans une machine électrique. En particulier l'invention concerne un procédé d'installation de groupes de bobine dans un stator ou un rotor d'un moteur et/ou générateur électrique.

### Arrière-plan technologique

Les procédés d'installation de groupes de bobine dans une machine électrique sont des opérations généralement effectuées en grande partie manuellement, en particulier dans un contexte industriel aéronautique ou spatial. Ces opérations consistent notamment à insérer les conducteurs formant les bobines dans des encoches, notamment des encoches de stator ou rotor d'un moteur et/ou générateur électrique.

Les conducteurs formant une bobine sont enroulés autour du stator ou du rotor pour former des spires de la bobine. Les encoches définissent des chemins de passage des conducteurs, en permettant de maintenir en position les conducteurs.

Lorsque les conducteurs formant une bobine sont insérés dans les encoches prédéterminées, les parties de bobine qui sont agencées hors des encoches sont appelées les têtes de bobine. Ces têtes de bobine dépassent de la machine électrique et sont mises en forme pour réduire leur encombrement. Du fait du croisement de certaines bobines entre-elles, une isolation supplémentaire peut être placée entre chaque bobine en contact ou susceptible d'entrer en contact, afin d'éviter la transmission de courant électrique.

Actuellement, une mise en forme des têtes de bobine, souvent manuelle, peut être effectuée lors de l'installation de chaque bobine, et un compactage final est réalisée après insertion de l'ensemble des bobines. Le compactage permet de réduire l'encombrement des têtes de bobine en leur faisant prendre leur forme finale.

Le document JP S57 15673 U divulgue un procédé de compactage des têtes de bobine.

Les procédés actuels d'installation présentent plusieurs inconvénients. En particulier, l'opération de compactage final a pour inconvénient majeur de dégrader la maitrise de l'isolation entre les bobines de la machine électrique car elle provoque le déplacement des conducteurs les uns par rapport aux autres et le déplacement des isolations entre conducteurs. Ces déplacements ne sont pas maitrisables et sont donc non maitrisés, ce qui ne permet pas de garantir une isolation correcte lorsqu'un compactage important est nécessaire. Or, l'isolation entre les bobines est critique, en particuliers lorsque les bobines forment des phases différentes de la machine électrique, et en particulier dans les moteurs électriques alimentés en modulation en largeur d'impulsion (ou PWM pour *Pulse Width Modulation* en anglais).

Les inventeurs ont donc cherché une solution permettant de garantir une bonne isolation entre les bobines qui doivent être isolées.

Par ailleurs, cette opération de compactage final n'est pas compatible avec le développement de la maîtrise de la position des conducteurs au sein des stators de moteurs électriques avec conducteurs en fils souples insérés en vrac.

### Objectifs de l'invention

L'invention vise à fournir un procédé d'installation de groupes de bobine dans une machine électrique permettant de garantir l'isolation et l'encombrement des bobines installées.

L'invention vise en particulier à fournir, dans au moins un mode de réalisation, un procédé d'installation permettant de simplifier la mise en place d'isolation entre les têtes de bobine.

L'invention vise aussi à fournir, dans au moins un mode de réalisation de l'invention, un procédé d'installation permettant la réduction de l'encombrement des têtes de bobine.

L'invention vise aussi à fournir, dans au moins un mode de réalisation de l'invention, un procédé d'installation dans lequel les conducteurs sont moins soumis à déplacement non-souhaité lors des opérations de compactage.

L'invention vise aussi à fournir, dans au moins un mode de réalisation de l'invention, un procédé d'installation ayant une meilleure répétabilité.

### Exposé de l'invention

Pour ce faire, l'invention concerne un procédé d'installation de groupes de bobine dans une machine électrique, chaque groupe de bobine comprenant au moins une bobine, chaque bobine étant composé d'une pluralité de spires de conducteurs, caractérisé en ce qu'il comprend, pour chaque groupe de bobine, les étapes suivantes d'installation appliquées à chaque groupe de bobine avant d'être appliquées au groupe de bobine suivant :
- une étape d'insertion d'un premier groupe de bobine dans au moins deux encoches libres ou partiellement occupées de la machine électrique, les parties de bobine agencées hors des encoches formant les têtes de bobine,
- une étape de mise en forme définitive par compactage des têtes des bobine dudit groupe de bobine selon une forme prédéterminée, par un outillage préconfiguré.

Un procédé d'installation selon l'invention permet donc de maîtriser le positionnement des différentes bobines regroupées en groupes de bobine et de maîtriser l'effort de compactage sur chacune des bobines. La réalisation séquentielle des étapes d'installation permet une meilleure robustesse sur le résultat obtenu par rapport à ce qui est prévu lors de l'installation des groupes de bobine. En particulier, le procédé est plus répétable et permet d'obtenir des têtes de bobine présentant un encombrement réduit et une isolation facilitée et donc garantie, par rapport à l'art antérieur ou les déplacements des bobines entre elles lors du compactage final peuvent remettre en cause la fiabilité de l'isolation.

En particulier, la mise en forme pour chaque bobine est définitive grâce à un compactage qui neutralise l'effet ressort des conducteurs des bobines. Chaque groupe de bobine prend ainsi une forme prédéterminée et figée avant l'installation du groupe de bobine suivant. Ce sont cette prédétermination de l'encombrement de chaque groupe de bobine et cette mise en forme définitive qui permettent d'obtenir la répétabilité qui facilite la réduction de l'encombrement globale des têtes de bobine et la fiabilité de l'isolation. Le compactage est un compactage tridimensionnel dans le sens où la forme prédéterminée que prend chaque groupe de bobine s'inscrit dans un volume tridimensionnel prédéterminé obtenu grâce au compactage. Le volume tridimensionnel peut être la résultante d'un compactage selon une ou plusieurs composantes radiales et/ou une ou plusieurs composantes axiales, étant entendu qu'une composante de compactage axiale peut avoir des conséquences radiales sur le volume occupé par le groupe de bobine et qu'une composante de compactage radiale peut avoir des conséquences axiales sur le volume occupé par le groupe de bobine, selon les outillages utilisés.

Le compactage peut être effectué par des outils spéciaux de sorte à obtenir, pour chaque groupe de bobine, une forme des têtes de bobine compactées optimisée.

Chaque groupe de bobine peut comprendre une ou plusieurs bobines : chaque groupe de bobine comprend la ou les bobines qui peuvent être insérées en même temps au vu de leur configuration dans les encoches, et mise en forme en même temps par l'étape de mise en forme définitive. Chaque groupe de bobine peut comprendre un nombre différent des autres groupes de bobine. Le nombre de bobines, la nature des bobines (type de phase formé par cette bobine par exemple) et leur emplacement dans les encoches sont donc pris en compte au préalable pour déterminer les groupes de bobine et exécuter le procédé avec ces groupes de bobine prédéterminés.

Avantageusement et selon l'invention, les étapes d'installation comprennent une étape de mise en place d'une isolation sur les têtes de bobine compactées si un groupe de bobine est à installer ensuite et/ou si une connexion de bobine à une alimentation nécessite ladite isolation.

Selon cet aspect de l'invention, l'installation de l'isolation est facilitée après la mise en forme définitive des groupes de bobine, et le risque de déplacement de l'isolation est fortement minimisé car les bobines mises en forme définitivement ne se déplacent pas lors de l'installation du ou des groupes de bobine suivants. L'isolation de chaque groupe de bobine est donc garantie.

L'isolation est mise en place si un groupe de bobine est à installer ensuite, ou si une connexion des bobines à une alimentation nécessite cette isolation, généralement lorsque tous les groupes de bobine sont installés.

Selon d'autre variantes de l'invention, l'isolation peut-être préalablement incluse dans toute ou une partie des bobines (conducteur émaillé par exemple), et l'ajout d'isolation entre les groupes de bobine n'est pas nécessaire selon les bobines installées.

Avantageusement et selon l'invention, chaque groupe de bobine est mise en forme de façon à occuper un volume sensiblement étendu selon un plan principal différent pour chaque groupe de bobine, les plans principaux des groupes de bobine étant sensiblement parallèles.

Selon cet aspect de l'invention, la disposition des groupes de bobine selon des volumes distincts répartis selon plusieurs plans permet notamment d'éviter les risques de déplacements des groupes de bobine déjà mise en forme définitivement lors de la mise en forme des groupes de bobine suivants par compactage.

Avantageusement et selon ces derniers aspects de l'invention, une isolation est agencée sensiblement selon un plan parallèle aux plans principaux des groupes de bobine, entre deux plans principaux de groupes de bobine qui doivent être isolés l'un de l'autre.

Selon cet aspect de l'invention, la séparation des groupes de bobine selon plusieurs plans permet de simplifier grandement l'installation de l'isolation si celle-ci est nécessaire, puisque l'isolation peut se faire selon un plan parallèle entre deux plans principaux de groupes de bobine, et ne doit pas être gérée bobine par bobine.

Avantageusement et selon l'invention, l'étape de mise en forme comprend, pour au moins un groupe de bobine, une étape de mise en température du groupe de bobine.

Avantageusement et selon l'invention, l'étape de mise en température du groupe de bobine comprend une sous-étape de chauffage du groupe de bobine maintenu en forme compactée à une température supérieure ou égale à 100°C pendant une durée prédéterminée, une sous-étape de refroidissement du groupe de bobine maintenu en forme compactée, et une sous-étape de relâchement du compactage du groupe de bobine refroidi.

Selon cet aspect de l'invention, la mise en température permet de renforcer le positionnement du groupe de bobine en figeant la position de la ou des bobines du groupe de bobine installé. La température utilisée peut être bien supérieure à 100°C selon les matériaux utilisés pour former les conducteurs de bobine.

Cette étape optionnelle peut être mise en place notamment lorsque la quantité de conducteurs formant les têtes de bobine du groupe de bobine est importante, par exemple parce qu'il y a un grand nombre de conducteurs dans le groupe de bobine, et/ou parce qu'une longueur importante de conducteurs dépasse des encoches de la machine pour former les têtes de bobine. C'est dans ce cas que les risques de déplacement des conducteurs après compactage sont les plus importants.

Dans un même procédé d'installation pour une même machine électrique, cette étape peut être mise en œuvre pour un ou plusieurs groupes de bobine et pas mise en œuvre pour un ou plusieurs autres groupes de bobine.

Selon d'autres modes de réalisation de l'invention, d'autres méthodes peuvent être mise en œuvre dans l'étape de mise en forme définitive, par exemple un martelage du groupe de bobine jusqu'à mise en forme définitive.

Avantageusement et selon l'invention, l'étape de mise en forme comprend un compactage selon au moins une composante dite axiale, compactant les têtes de bobine selon une direction perpendiculaire à une surface de la machine électrique et vers ladite surface de la machine électrique.

Avantageusement et selon l'invention, l'étape de mise en forme comprend un compactage selon au moins une composante dite radiale, compactant les têtes de bobine selon une direction perpendiculaire à un axe principal de la machine électrique, dans un sens de compactage dirigé depuis ledit axe principal de la machine électrique et vers l'extérieur de la machine électrique.

Avantageusement et selon cette dernière variante de l'invention, le compactage est dirigé vers l'extérieur en appui sur une surface intérieure d'un outil de mise en forme.

L'invention concerne également un dispositif d'assistance à l'installation de groupe de bobine, caractérisé en ce qu'il est configuré pour effectuer, après l'installation de chaque bobine, l'étape de mise en forme de compactage du procédé d'installation selon l'invention, et comprenant un outil de compression configuré pour exercer une force sur les têtes de bobine selon une ou plusieurs composantes radiales, et un outil de mise en forme entourant les têtes de bobine et configuré pour que les têtes de bobine soient en appui sur une surface intérieure de l'outil de mise en forme lorsqu'elles sont compressées par l'outil de compression.

Selon cet aspect de l'invention, chaque groupe de bobine compacté pourra être compressée grâce au même couple outil de compression-outil de mise en forme, ou bien l'outil de compression et l'outil de mise en forme peuvent chacun être différents selon les groupes de bobine afin d'obtenir des formes de groupes de bobine compactées présentant un encombrement minimal.

L'invention concerne également une machine électrique, comprenant des encoches destinées à recevoir des bobines, caractérisée en ce qu'elle comprend des groupes de bobine installés par la mise en œuvre d'un procédé d'installation selon l'invention.

L'invention concerne également un procédé d'installation, un dispositif d'assistance et une machine électrique, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un procédé d'installation selon un mode de réalisation de l'invention,
[Fig. 2a] est une vue schématique en perspective d'une machine électrique et d'un dispositif d'assistance selon un mode de réalisation de l'invention, durant une première étape d'installation d'un premier groupe de bobine selon un procédé d'installation selon un mode de réalisation de l'invention,
[Fig. 2b] est une vue schématique en perspective d'une machine électrique et d'un dispositif d'assistance selon un mode de réalisation de l'invention, durant une deuxième étape d'installation d'un premier groupe de bobine selon un procédé d'installation selon un mode de réalisation l'invention,
[Fig. 3a] est une vue schématique en perspective d'une machine électrique et d'un dispositif d'assistance selon un mode de réalisation de l'invention, durant une première étape d'installation d'un deuxième groupe de bobine selon un procédé d'installation selon un mode de réalisation de l'invention,
[Fig. 3b] est une vue schématique en perspective d'une machine électrique et d'un dispositif d'assistance selon un mode de réalisation de l'invention, durant une deuxième étape d'installation d'un deuxième groupe de bobine selon un procédé d'installation selon un mode de réalisation de l'invention,
[Fig. 4a] est une vue schématique en perspective d'une machine électrique simplifiée dans laquelle ont été installées des groupes de bobine par un procédé d'installation selon un mode de réalisation de l'invention,
[Fig. 4b] est une vue schématique en perspective d'une machine électrique dans laquelle ont été installées des groupes de bobine par un procédé d'installation selon un mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

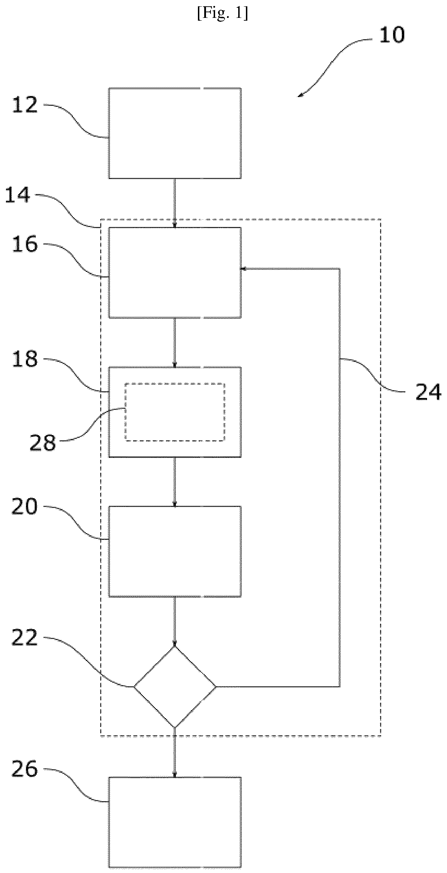

La figure 1 illustre schématiquement un procédé 10 d'installation selon un mode de réalisation de l'invention. Le procédé 10 d'installation permet l'installation de groupes de bobine dans une machine électrique, par exemple un stator d'un moteur et/ou d'un générateur électrique chaque groupe de bobine comprenant au moins une bobine, chaque bobine étant composé d'une pluralité de spires de conducteurs.

Le procédé 10 d'installation comprend une étape 12 préliminaire de détermination de l'installation des bobines dans une machine électrique. L'objectif de cette étape 12 de détermination est de déterminer, à partir de l'ensemble de bobines à installer, les groupes de bobine qui vont être insérés dans la machine électrique, la manière dont le compactage des têtes de bobine va être effectué, l'emplacement des éventuelles isolations, etc. Cette étape 12 de détermination est effectuée en amont, dans une phase de conception de la machine électrique.

Le procédé d'installation comprend ensuite des étapes 14 d'installation des groupes de bobine dans la machine électrique suivant les paramètres prédéterminés.

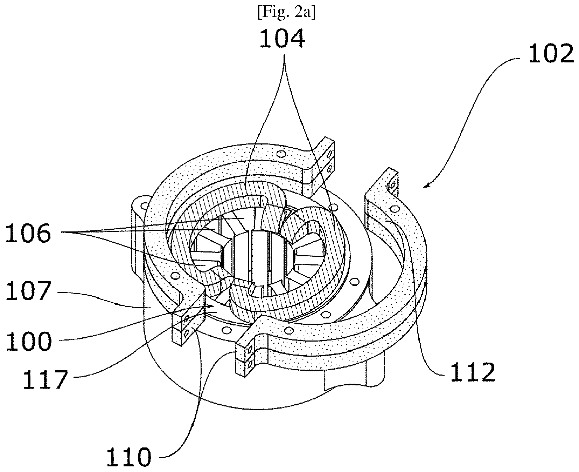

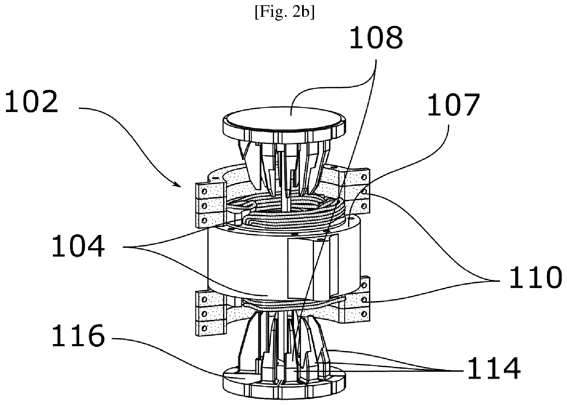

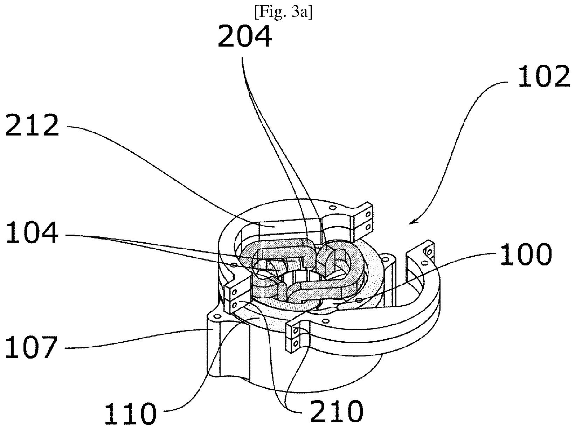

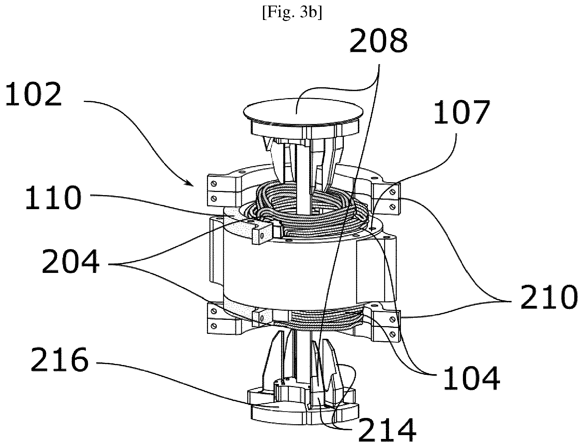

En particulier, les étapes 14 d'installation sont appliquées à chaque groupe de bobine avant d'être appliquées au groupe de bobine suivant et comprennent notamment :
- une étape 16 d'insertion d'un premier groupe de bobine dans au moins deux encoches libres ou partiellement occupées de la machine électrique, les parties de bobine agencées hors des encoches formant les têtes de bobine ;
- une étape 18 de mise en forme définitive par compactage des têtes des bobine dudit groupe de bobine selon une forme prédéterminée, par un outillage préconfiguré. Cette mise en forme est par exemple effectuée par un outillage qui sera par exemple décrit plus bas en référence aux figures 2a, 2b, 3a et 3b.

Si un groupe de bobine est à installer ensuite et/ou si une connexion de bobine à une alimentation nécessite une isolation, les étapes d'installation appliquées au groupe de bobine en cours comprennent une étape 20 de mise en place d'une isolation sur les têtes de bobine compactées.

Une étape 22 permet de vérifier s'il reste un groupe de bobine à installer. Si c'est le cas, le nouveau groupe de bobine est installé selon les étapes 14 d'installations (selon la boucle 24 des étapes d'installations). S'il n'y a plus de groupe de bobine à installer, une étape 26 de finalisation est mise en œuvre, qui comprend par exemple la connexion de chaque bobine à son alimentation dédiée, selon des méthodes d'alimentations de l'état de la technique (un pôle ou multipolaire, monophasé ou polyphasé, etc.).

L'étape 18 de mise en forme définitive peut comprendre, dans ce mode de réalisation, une étape 28 de mise en température d'un groupe de bobine. Cette étape 28 de mise en température consiste par exemple à utiliser une étuve, un effet Joule ou autre technique pour chauffer les têtes de bobine à une température supérieure à 100°C, parfois plus élevée selon le matériau utilisé, lorsque les têtes de bobine sont contraintes pendant le compactage. Après le refroidissement, la contrainte du compactage est levée et les têtes de bobine conservent leur mise en forme définitive en forme compactées.

La figure 2a et la figure 2b illustrent schématiquement en perspective une machine 100 électrique et d'un dispositif 102 d'assistance selon un mode de réalisation de l'invention, durant respectivement une première et une deuxième étape d'installation d'un premier groupe 104 de bobine selon un procédé d'installation selon un mode de réalisation de l'invention. La figure 2a représente la machine électrique une fois les bobines du premier groupe de bobine installées dans les encoches et la figure 2b représente la mise en place des outillages permettant la mise en forme définitive des têtes de bobine du premier groupe de bobine.

La machine 100 électrique est par exemple un stator d'un moteur électrique, qui comprend des encoches 106. Le premier groupe 104 de bobine installé (rempli par un motif de hachures orientées du haut à gauche vers le bas à droite) dans la machine 100 électrique comprend une partie visible qui émerge des encoches 106, formant les têtes de bobine. La machine 100 électrique peut être maintenue par un outillage 107.

La mise en forme des têtes de bobine, lors de l'étape de mise en forme définitive par compactage des têtes de bobine, est réalisé grâce à un premier outillage du dispositif 102 d'assistance, par exemple ici un outil 108 de compression configuré pour exercer une force sur les têtes de bobine selon une ou plusieurs composantes radiales et un outil 110 de mise en forme (rempli par un motif à pois) entourant les têtes de bobine et configuré pour que les têtes de bobine soient en appui sur la surface 112 intérieure de l'outil 110 de mise en forme lorsqu'elles sont compressées par l'outil 108 de compression.

En particulier, l'outil 108 de compression comprend, dans ce mode de réalisation, des lames 114 inclinées qui, lorsque l'outil 108 de compression se déplace selon l'axe de la machine électrique, exerce une force croissante sur les têtes de bobine pour les compresser sur la surface 112 intérieure de l'outil 110 de mise en forme. L'outil 108 de compression comprend également, dans ce mode de réalisation, une surface 116 de compression axiale. Le compactage des têtes de bobine est ainsi tridimensionnel grâce à l'appui radial par les lames 114 et axial par la surface 116 de compression axiale. Les lames 114 peuvent être configurées pour pénétrer uniquement dans les encoches libres, pour ne pas agir sur les bobines déjà installées dans les encoches. La surface 116 de compression axiale permet de compacter les têtes de bobine selon une direction perpendiculaire à une surface 117, visible sur la figure 2a.

Les figures 3a et 3b illustrent schématiquement en perspective une machine 100 électrique et d'un dispositif 102 d'assistance selon un mode de réalisation de l'invention, durant respectivement une première et une deuxième étape d'installation d'un deuxième groupe de bobine selon un procédé d'installation selon un mode de réalisation de l'invention. La figure 3a représente la machine électrique une fois les bobines du deuxième groupe de bobine installées dans les encoches et la figure 3b représente la mise en place des outillages permettant la mise en forme définitive des têtes de bobine du deuxième groupe de bobine.

De façon identique aux figures 2a et 2b, le deuxième groupe 204 de bobine (rempli par un motif à hachures du haut à droite vers le bas à gauche) comprend des têtes de bobine émergeant des encoches de la machine 100 électrique. Les têtes de bobine du deuxième groupe 204 de bobine sont agencées au-dessus des têtes de bobine du premier groupe 104 de bobine déjà mise en forme définitivement par compactage.

La mise en forme des têtes de bobine du deuxième groupe 204 de bobine est mise en œuvre par un deuxième outillage du dispositif 102 d'assistance, comprenant ici un outil 208 de compression comprenant des lames 214 et une surface 216 de compression axiale, et un outil 210 de mise en forme en complément de l'outil 110 de mise en forme du premier groupe 110 de bobine resté en place. L'outil 210 de mise en forme comprend une surface 212 intérieure qui peut être de forme différente de l'outil 110 de mise en forme du premier groupe de bobine, comme visible en particulier sur la figure 3a. L'outil 208 de compression utilisé pour le deuxième groupe de bobine peut être le même que celui utilisé pour le premier groupe de bobine, dans lequel on peut adapter le nombre de lame en fonction des encoches libres à l'étape dans laquelle on l'utilise.

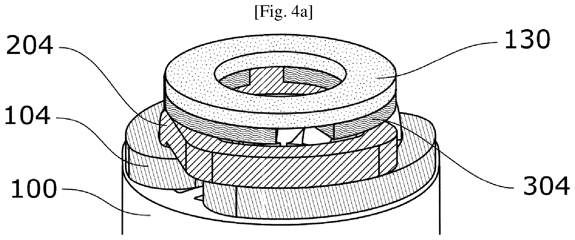

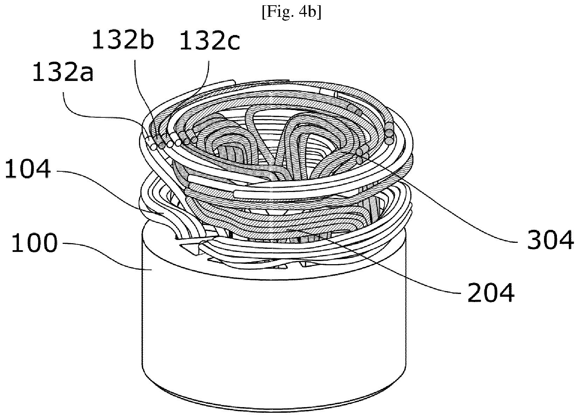

Les figures 4a et 4b illustrent schématiquement en perspective une machine électrique dans laquelle ont été installées des groupes de bobine par un procédé d'installation selon un mode de réalisation de l'invention, respectivement en version simplifiée et en version plus réaliste.

Dans la figure 4a, la version simplifiée montre trois groupes de bobine installés et ayant leurs têtes de bobine mise en forme définitivement par compactage, respectivement un premier groupe 104 de bobine, un deuxième groupe 204 de bobine et un troisième groupe 304 de bobine (rempli par un motif en vaguelettes horizontales). Chaque groupe de bobine mis en forme occupe un volume sensiblement étendu selon un plan principal différent pour chaque groupe de bobine, les plans principaux des groupes de bobine étant sensiblement parallèles. S'il est nécessaire de mettre en place une isolation sur les têtes de bobine, cette isolation peut être agencée sensiblement selon un plan parallèle aux plans principaux des groupes de bobine, entre deux plans principaux de groupes de bobine qui doivent être isolés l'un de l'autre. En outre, une isolation peut être prévue pour éviter les contacts entre les groupes de bobines entre les encoches de la machine électrique et le plan principal occupé par chaque groupe de bobine. En particulier, le deuxième groupe de bobine doit être isolé du premier groupe de bobine entre les encoches de la machine électrique et le plan principal occupé par le deuxième groupe de bobine, et le troisième groupe de bobine doit être isolé du premier groupe de bobine et du deuxième groupe de bobine entre les encoches de la machine électrique et le plan principal occupé par le troisième groupe de bobine.

Les têtes de bobine sont ici surplombées d'une zone 130 de connexion (remplie par un motif à pois) comprenant des conducteurs pouvant être connectés à une alimentation. Selon d'autres modes de réalisation, les conducteurs de connexion peuvent être disposés différemment.

La figure 4b fait apparaître les conducteurs de chaque groupe de bobine. Les groupes de bobine comprennent chacun des connecteurs qui sont présents dans la zone 130 de connexion au-dessus des têtes de bobine mise en forme définitivement par compactage. En particulier, un connecteur 132a permet la connexion d'une bobine du premier groupe 104 de bobine (à remplissage uni sans motif, pour davantage de clarté), un connecteur 132b permet la connexion d'une bobine du deuxième groupe 204 de bobine et un connecteur 132c permet la connexion d'une bobine du troisième groupe 304 de bobine. Un connecteur peut être relié à une entrée ou une sortie d'une alimentation.

L'invention ne se limite pas aux modes de réalisation décrits. En particulier, le dispositif d'assistance peut utiliser d'autres types d'outillages pour la compression, les bobines peuvent être de formes différentes, etc.

## Revendications

1. Procédé d'installation de groupes de bobine dans une machine (100) électrique, chaque groupe (104, 204, 304) de bobine comprenant au moins une bobine, chaque bobine étant composé d'une pluralité de spires de conducteurs, **caractérisé en ce qu'**il comprend, pour chaque groupe (104, 204, 304) de bobine, les étapes (14) suivantes d'installation appliquées à chaque groupe de bobine avant d'être appliquées au groupe de bobine suivant :
- une étape (16) d'insertion d'un premier groupe de bobine dans au moins deux encoches (106) libres ou partiellement occupées de la machine (100) électrique, les parties de bobine agencées hors des encoches formant les têtes de bobine,
- une étape (18) de mise en forme définitive par compactage des têtes des bobine dudit groupe de bobine selon une forme prédéterminée, par un outillage préconfiguré.

2. Procédé d'installation selon la revendication 1, **caractérisé en ce que** les étapes d'installation comprennent une étape (20) de mise en place d'une isolation sur les têtes de bobine compactées si un groupe (104, 204, 304) de bobine est à installer ensuite et/ou si une connexion de bobine à une alimentation nécessite ladite isolation.

3. Procédé d'installation selon l'une des revendications 1 ou 2, **caractérisé en ce que** chaque groupe (104, 204, 304) de bobine est mise en forme de façon à occuper un volume sensiblement étendu selon un plan principal différent pour chaque groupe de bobine, les plans principaux des groupes de bobine étant sensiblement parallèles.

4. Procédé d'installation selon une combinaison des revendications 2 et 3, **caractérisé en ce qu'**une isolation est agencée sensiblement selon un plan parallèle aux plans principaux des groupes (104, 204, 304) de bobine, entre deux plans principaux de groupes (104, 204, 304) de bobine qui doivent être isolés l'un de l'autre.

5. Procédé d'installation selon l'une des revendications 1 à 4, **caractérisé en ce que** l'étape (18) de mise en forme comprend, pour au moins un groupe (104, 204, 304) de bobine, une étape (28) de mise en température du groupe de bobine.

6. Procédé d'installation selon la revendication 5, **caractérisé en ce que** l'étape (28) de mise en température du groupe de bobine comprend une sous-étape de chauffage du groupe de bobine (104, 204, 304) maintenu en forme compactée à une température supérieure ou égale à 100°C pendant une durée prédéterminée, une sous-étape de refroidissement du groupe de bobine maintenu en forme compactée, et une sous-étape de relâchement du compactage du groupe de bobine refroidi.

7. Procédé d'installation selon l'une des revendications 1 à 6, **caractérisé en ce que** l'étape (18) de mise en forme comprend un compactage selon au moins une composante dite axiale, compactant les têtes de bobine selon une direction perpendiculaire à une surface (107) de la machine (100) électrique et vers ladite surface de la machine électrique.

8. Procédé d'installation selon l'une des revendications 1 à 7, **caractérisé en ce que** l'étape (18) de mise en forme comprend un compactage selon au moins une composante dite radiale, compactant les têtes de bobine selon une direction perpendiculaire à un axe principal de la machine (100) électrique, dans un sens de compactage dirigé depuis ledit axe principal de la machine électrique et vers l'extérieur de la machine électrique.

9. Dispositif d'assistance à l'installation de groupe de bobine, **caractérisé en ce qu'**il est configuré pour effectuer, après l'installation de chaque bobine, l'étape de mise en forme de compactage du procédé (10) d'installation selon l'une des revendications 1 à 8, et **en ce qu'**il comprend un outil (108) de compression configuré pour exercer une force sur les têtes de bobine selon une ou plusieurs composantes radiales, et un outil (110) de mise en forme entourant les têtes de bobine et configuré pour que les têtes de bobine soient en appui sur une surface (112) intérieure de l'outil de mise en forme lorsqu'elles sont compressées par l'outil (108) de compression.

10. Machine électrique, comprenant des encoches destinées à recevoir des bobines, **caractérisée en ce qu'**elle comprend des groupes de bobine installés par la mise en œuvre d'un procédé (10) d'installation selon l'une des revendications 1 à 8.

## Patentansprüche

1. Verfahren zum Einbau von Spulengruppen in eine elektrische Maschine (100), worin jede Spulengruppe (104, 204, 304) mindestens eine Spule umfasst und jede Spule aus mehreren Leiterwindungen besteht, **dadurch gekennzeichnet, dass** es für jede Spulengruppe (104, 204, 304) die folgenden Einbauschritte (14) umfasst, die auf jede Spulengruppe angewendet werden, bevor sie auf die nächste Spulengruppe angewendet werden:
- einen Schritt (16) zum Einsetzen einer ersten Spulengruppe in mindestens zwei freie oder teilweise belegte Schlitze (106) der elektrischen Maschine (100), wobei die außerhalb der Schlitze angeordneten Spulenabschnitte die Spulenköpfe bilden,
- einen Schritt (18) zur endgültigen Formgebung durch Verdichten der Köpfe der Spulen der genannten Spulengruppe in eine bestimmte Form mittels einer vorkonfigurierten Vorrichtung.

2. Einbauverfahren nach Anspruch 1, **dadurch gekennzeichnet, dass** die Einbauschritte einen Schritt (20) des Anordnens einer Isolierung an den verdichteten Spulenköpfen umfassen, wenn eine Spulengruppe (104, 204, 304) anschließend eingebaut werden soll und/oder wenn eine Spulenverbindung zu einer Stromversorgung diese Isolierung erfordert.

3. Einbauverfahren nach einem der Ansprüche 1 oder 2, **dadurch gekennzeichnet, dass** jede Spulengruppe (104, 204, 304) so geformt ist, dass sie einen Raum einnimmt, der sich im Wesentlichen in einer für jede Spulengruppe unterschiedlichen Hauptebene erstreckt, worin die Hauptebenen der Spulengruppen im Wesentlichen parallel zueinander verlaufen.

4. Einbauverfahren nach einer Kombination der Ansprüche 2 und 3, **dadurch gekennzeichnet, dass** eine Isolierung im Wesentlichen in einer Ebene parallel zu den Hauptebenen der Spulengruppen (104, 204, 304) zwischen zwei Hauptebenen von Spulengruppen (104, 204, 304) angeordnet ist, die gegeneinander isoliert werden müssen.

5. Einbauverfahren nach einem der Ansprüche 1 bis 4, **dadurch gekennzeichnet, dass** der Formungsschritt (18) für mindestens eine Spulengruppe (104, 204, 304) einen Schritt (28) des Heraufbringens der Spulengruppe auf Temperatur umfasst.

6. Einbauverfahren nach Anspruch 5, **dadurch gekennzeichnet, dass** der Schritt (28) des Heraufbringens der Spulengruppe auf Temperatur einen Teilschritt, bei dem die in verdichteter Form gehaltene Spulengruppe (104, 204, 304), für eine bestimmte Dauer auf eine Temperatur von mindestens 100°C erwärmt wird, einen Teilschritt des Abkühlens der in verdichteter Form gehaltenen Spulengruppe und einen Teilschritt des Entspannens der Verdichtung der abgekühlten Spulengruppe umfasst.

7. Einbauverfahren nach einem der Ansprüche 1 bis 6, **dadurch gekennzeichnet, dass** der Formungsschritt (18) das Verdichten gemäß mindestens einer Komponente, die als axiale Komponente bezeichnet wird, umfasst, wobei die Spulenköpfe in einer Richtung senkrecht zu einer Oberfläche (107) der elektrischen Maschine (100) und in Richtung dieser Oberfläche der elektrischen Maschine verdichtet werden.

8. Einbauverfahren nach einem der Ansprüche 1 bis 7, **dadurch gekennzeichnet, dass** der Formungsschritt (18) das Verdichten gemäß mindestens einer Komponente umfasst, die als radiale Komponente bezeichnet wird, wobei die Spulenköpfe in einer Richtung senkrecht zu einer Hauptachse der elektrischen Maschine (100) in einer Verdichtungsrichtung verdichtet werden, die von der Hauptachse der elektrischen Maschine weg und zur Außenseite der elektrischen Maschine hin gerichtet ist.

9. Vorrichtung zur Unterstützung des Einbaus der Spulengruppe, **dadurch gekennzeichnet, dass** sie ausgestaltet ist, nach dem Einbau jeder Spule den Formungsschritt durch Verdichtung des Einbauverfahren (10) gemäß einem der Ansprüche 1 bis 8 auszuführen, und dass diese ein Kompressionswerkzeug (108) umfasst, das ausgestaltet ist, eine Kraft auf die Spulenköpfe gemäß einer oder mehreren radialen Komponenten auszuüben, sowie ein Formwerkzeug (110) umfasst, das die Spulenköpfe umgibt und so ausgestaltet ist, dass die Spulenköpfe an einer Innenfläche (112) des Formwerkzeugs anliegen, wenn sie durch das Kompressionswerkzeug (108) komprimiert werden.

10. Elektrische Maschine mit Schlitzen zur Aufnahme von Spulen, **dadurch gekennzeichnet, dass** sie Spulengruppen umfasst, die unter Anwendung eines Einbauverfahrens (10) gemäß einem der Ansprüche 1 bis 8 eingebaut wurden.

## Claims

1. Method for installing coil groups in an electric machine (100), each coil group (104, 204, 304) comprising at least one coil, each coil being composed of a plurality of turns of conductors, **characterized in that** it comprises, for each coil group (104, 204, 304), the following installation steps (14) applied to each coil group before being applied to the following coil group:
- a step (16) of inserting a first coil group into at least two free or partially occupied slots (106) of the electric machine (100), the coil portions arranged outside the slots forming the coil heads,
- a definitive shaping step (18) by compacting the heads of the coils of said coil group into a predetermined shape, by a preconfigured apparatus.

2. Installation method as claimed in claim 1, **characterized in that** the installation steps comprise a step (20) of placing insulation on the compacted coil heads if a coil group (104, 204, 304) is to be subsequently installed and/or if a coil connection to a power supply requires said insulation.

3. Installation method as claimed in any one of claims 1 or 2, **characterized in that** each coil group (104, 204, 304) is shaped so as to take up a space substantially extended in a different main plane for each coil group, the main planes of the coil groups being substantially parallel.

4. Installation method as claimed in a combination of claims 2 and 3, **characterized in that** insulation is arranged substantially in a plane parallel to the main planes of the coil groups (104, 204, 304), between two main planes of coil groups (104, 204, 304) which must be insulated with respect to each other.

5. Installation method as claimed in any one of claims 1 to 4, **characterized in that** the shaping step (18) comprises, for at least one coil group (104, 204, 304), a step (28) of bringing the coil group to temperature.

6. Installation method as claimed in claim 5, **characterized in that** the step (28) of bringing the coil group to temperature comprises a sub-step of heating the coil group (104, 204, 304) held in compacted shape to a temperature greater than or equal to 100°C for a predetermined duration, a sub-step of cooling the coil group held in compacted shape, and a sub-step of relaxing the compacting of the cooled coil group.

7. Installation method as claimed in any one of claims 1 to 6, **characterized in that** the shaping step (18) comprises compacting according to at least one component, referred to as axial component, compacting the coil heads in a direction perpendicular to a surface (107) of the electric machine (100) and towards said surface of the electric machine.

8. Installation method as claimed in any one of claims 1 to 7, **characterized in that** the shaping step (18) comprises compacting according to at least one component, referred to as radial component, compacting the coil heads in a direction perpendicular to a main axis of the electric machine (100) in a compacting direction directed away from said main axis of the electric machine and towards the exterior of the electric machine.

9. Device assisting the installation of the coil group, **characterized in that** it is configured to perform, after installation of each coil, the step of shaping by compacting of the installation method (10) as claimed in any one of claims 1 to 8, and **in that** it comprises a compression tool (108) configured to exert a force on the coil heads according to one or more radial components and a shaping tool (110) surrounding the coil heads and configured such that the coil heads bear against an inner surface (112) of the shaping tool when they are compressed by the compression tool (108).

10. Electric machine, comprising slots intended to receive coils, **characterized in that** it comprises coil groups installed by implementing an installation method (10) as claimed in any one of claims 1 to 8.
